(19) Europäisches Patentamt
European Patent Office
Office européen des brevets

(11) Veröffentlichungsnummer: **0 459 288 A1**

(12) **EUROPÄISCHE PATENTANMELDUNG**

(21) Anmeldenummer: **91108276.6**

(51) Int. Cl.5: **A01N 27/00**

(22) Anmeldetag: **22.05.91**

(30) Priorität: **31.05.90 DE 4017573**

(43) Veröffentlichungstag der Anmeldung: **04.12.91 Patentblatt 91/49**

(84) Benannte Vertragsstaaten: **CH DE DK ES FR GB IT LI NL**

(71) Anmelder: **BASF Aktiengesellschaft**
**Carl-Bosch-Strasse 38**
**W-6700 Ludwigshafen(DE)**

(72) Erfinder: **Von Deyn, Wolfgang, Dr.**
**Luederitzstrasse 4**
**W-6730 Neustadt(DE)**
Erfinder: **Wild, Jochen, Dr.**
**St.-Martin-Strasse 22**
**W-6701 Ruppertsberg(DE)**
Erfinder: **Hofmeister, Peter, Dr.**
**Bernard-Humblot-Strasse 12**
**W-6730 Neustadt(DE)**
Erfinder: **Kardorff, Uwe, Dr.**
**D 3,4**
**W-6800 Mannheim 1(DE)**
Erfinder: **Kuenast, Christoph, Dr.**
**Salierstrasse 2**
**W-6701 Otterstadt(DE)**

(54) **Alkylbenzole zur Bekämpfung von Nematoden.**

(57) Verfahren zur Bekämpfung von Nematoden oder Verhütung eines Befalls von Kulturpflanzen durch Nematoden, dadurch gekennzeichnet, daß man eine wirksame Menge eines Alkylbenzols der allgemeinen Formel I,

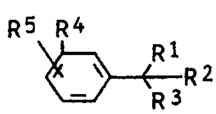

I

in der die Substituenten folgende Bedeutung haben:

- $R^1$, $R^2$ $C_1$-$C_4$-Alkyl;
- $R^3$ $C_1$-$C_6$-Alkyl, $C_3$-$C_6$-Cycloalkyl, $C_2$-$C_4$-Alkenyl oder $C_2$-$C_4$-Alkinyl;
- $R^4$ Wasserstoff, $C_1$-$C_6$-Alkyl oder $C_2$-$C_4$-Alkenyl;
- $R^5$ $C_1$-$C_6$-Alkyl, $C_3$-$C_6$-Cycloalkyl, $C_2$-$C_4$-Alkenyl oder $C_2$-$C_4$-Alkinyl,

auf die Schädlinge bzw. deren Lebensraum einwirken läßt, und Verwendung von Alkylbenzolen der Formel I zur Bekämpfung von Nematoden.

EP 0 459 288 A1

Die vorliegende Erfindung betrifft ein Verfahren zur Bekämpfung von Nematoden oder Verhütung eines Befalls von Kulturpflanzen durch Nematoden, dadurch, daß man eine wirksame Menge eines Alkylbenzols der allgemeinen Formel I,

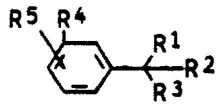
I

in der die Substituenten folgende Bedeutung haben:

- $R^1$, $R^2$ $C_1$-$C_4$-Alkyl;
- $R^3$ $C_1$-$C_6$-Alkyl, $C_3$-$C_6$-Cycloalkyl, $C_2$-$C_4$-Alkenyl oder $C_2$-$C_4$-Alkinyl;
- $R^4$ Wasserstoff, $C_1$-$C_6$-Alkyl oder $C_2$-$C_4$-Alkenyl;
- $R^5$ $C_1$-$C_6$-Alkyl, $C_3$-$C_6$-Cycloalkyl, $C_2$-$C_4$-Alkenyl oder $C_2$-$C_4$-Alkinyl,

insbesondere Verfahren zur Bekämpfung von Nematoden oder Verhütung eines Befalls von Kulturpflanzen durch Nematoden dadurch, daß man eine wirksame Menge des 1-tert.-Butyl-3,5-dimethylbenzols auf die Schädlinge bzw. deren Lebensraum einwirken läßt.

Die Nematodenbekämpfung gewinnt zunehmend an Bedeutung, da die heute übliche intensive Nutzung der Anbauflächen insbesondere im Gemüse- und Zierpflanzenbau zu einer starken Vermehrung dieser Schaderreger führen kann (R. Heitefuß, Pflanzenschutz, Thieme, 2. Auflage 1987).

Die heute in landwirtschaftlichen und gärtnerischen Kulturen eingesetzten Nematizide weisen jedoch eine hohe Warmblütertoxizität auf (Pestic. Sci. 28, 331 (1990)) und stellen daher im Hinblick auf den Anwenderschutz keine ideale Lösung dar.

Der vorliegenden Erfindung lag daher die Aufgabe zugrunde, ein wirkungsvolles und für den Anwender sicheres Verfahren zur Bekämpfung von Nematoden zu finden.

Demgemäß wurde gefunden, daß sich die vorstehend definierten Alkylbenzole der allgemeinen Formel I, insbesondere 1-tert.-Butyl-3,5-dimethylbenzol zur Bekämpfung von Nematoden eignen.

Die Verbindungen der allgemeinen Formel I sind bekannt; sie sind z. T. kommerziell erhältlich oder können nach den bekannten Methoden der elektrophilen Alkylierung von Aromaten wie beispielsweise in der folgenden Literatur genannt hergestellt werden:

- J. March, Advanced Organic Chemistry, Wiley, 3. Auflage 1985
- Houben-Weyl, Methoden der Organischen Chemie Band V/2b, Thieme 1981

In der allgemeinen Formel I können die Substituenten beispielsweise folgende Bedeutung haben:

- $R^1$, $R^2$ unabhängig voneinander Alkyl wie Methyl, Ethyl, Propyl, 1-Methylethyl, Butyl, 1-Methylpropyl, 2-Methylpropyl und 1,1-Dimethylethyl, insbesondere Methyl;
- $R^3$ Alkyl wie bei $R^1$ genannt sowie Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2,-Trimethylpropyl, 1-Ethyl-1-methylpropyl und 1-Ethyl-2-methylpropyl, insbesondere Methyl;
  Cycloalkyl wie Cyclopropyl, Cyclobutyl, Cyclopentyl und Cyclohexyl;
  Alkenyl wie Ethenyl, 1-Propenyl, 2-Propenyl, 1-Methylethenyl, 1-Butenyl, 2-Butenyl, 3-Butenyl, 1-Methyl-1-propenyl, 1-Methyl-2-propenyl, 2-Methyl-1-propenyl und 2-Methyl-2-propenyl, oder
  Alkinyl wie Ethinyl, 1-Propinyl, 2-Propinyl, 1-Butinyl, 2-Butinyl, 3-Butinyl und 1-Methyl-2-propinyl;
- $R^4$ Wasserstoff;
  Alkyl wie bei $R^3$ genannt, insbesondere Methyl oder
  Alkenyl wie bei $R^3$ genannt;
- $R^5$ einer der bei $R^3$ genannten Substituenten, insbesondere Methyl.

Die Alkylbenzole I zeichnen sich neben ihrer nematodiziden Wirkung außerdem durch günstige toxikologische Eigenschaften aus (N.I. Sax, R.J. Lewis, Dangerous Properties of Industrial Materials, 7. Ausgabe, 1989).

Zur Klasse der Nematoden zählen beispielsweise Wurzelgallennematoden, z.B. Meloidogyne hapla, Meloidogyne incognita, Meloidogyne javanica, Zysten bildende Nematoden, z. B. Globodera rostochiensis, Heterodera avenae, Heterodera glycinae, Heterodera schatii, Heterodera triflolii, Stock- und Blattälchen, z. B. Belonolaimus longicaudatus, Ditylenchus destructor, Ditylenchus dipsaci, Heliocotylenchus multicinctus,

Longidorus elongatus, Radopholus similis, Rotylenchus robustus, Trichodorus primitivus, Tylenchorhynchus claytoni, Tylenchorhynchus dubius, Pratylenchus neglectus, Pratylenchus penetrans, Paratylenchus curvitatus, Partylenchus goodeyi.

Die Wirkstoffe können als solche, in Form ihrer Formulierungen oder den daraus bereiteten Anwendungsformen, z. B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Benzol, Toluol, Xylol, Paraffin, Tetrahydronaphthalin, alkylierte Naphthaline oder deren Derivate, Methanol, Ethanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier-oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin-Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z. B. Umhüllungs-, Imprägnierungs- und Homogengranulate, können durch Bindung der Wirkstoffe an feste Trägerstoffe hergestellt werden. Feste Trägerstoffe sind z. B. Mineralerden, wie Silicagel, Kieselsäuren, Kieselgele, Silikate, Talkum Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z. B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im allgemeinen zwischen 0,1 und 95 Gew.% Wirkstoff, vorzugsweise zwischen 0,5 und 90 Gew.%.

Die Wirkstoffkonzentrationen in den anwendungsfertigen Zubereitungen können in größeren Bereichen variiert werden.

Im allgemeinen liegen sie zwischen 0,0001 und 10 %, vorzugsweise zwischen 0,01 und 1 %.

Die Wirkstoffe können auch mit gutem Erfolg im Ultra-Low-Volume-Verfahren (ULV) verwendet werden, wobei es möglich ist, Formulierungen mit mehr als 95 Gew.% Wirkstoff oder sogar den Wirkstoff ohne Zusätze auszubringen.

Die Aufwandmenge an Wirkstoff beträgt unter Freilandbedingungen 0,2 bis 10, vorzugsweise 0,5 bis 6,0 kg/ha.

Zu den Wirkstoffen können Öle verschiedenen Typs, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

Synthesebeispiele

Die Herstellung von 1-tert.Butyl-3,5-dimethylbenzol ist beispielsweise in J.M.A. Bass et al., Recl. Trav. Chim. Pays-Bas, 88, 1110 (1969) beschrieben. Die dort angegebene Vorschrift kann unter Abwandlung der Ausgangsstoffe zur Gewinnung weiterer Alkylbenzole I benutzt werden. Würden anderen Synthesevorschriften benutzt, sind bei den in der anschließenden Tabelle aufgeführten Beispielverbindungen die entsprechenden Literaturzitate angegeben.

Tabelle

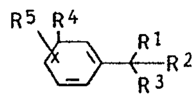

I (R1 = R2 = Methyl)

| Bsp.-Nr. | R3 | R4 | R5 | physik. Daten | Lit. |
|---|---|---|---|---|---|
| 1.001 | Methyl | H | 2-Methyl | Kp. 200°C | 1) |
| 1.002 | Methyl | H | 3-Methyl | Kp. 189°C | 1) |
| 1.003 | Methyl | H | 4-Methyl | Kp. 192°C | 1) |
| 1.004 | Methyl | H | 3-Ethyl | Kp. 205°C | 1) |
| 1.005 | Methyl | H | 4-Ethyl | Kp. 207°C | 1) |
| 1.006 | Methyl | H | 4-(1-Methylethyl) | Kp. 90°C | |
| 1.007 | Methyl | H | 4-Butyl | Kp. 241°C | 1) |
| 1.008 | Methyl | H | 4-(1-Methylpropyl) | $Kp_9$ 102°C | |
| 1.009 | Methyl | H | 4-(1,1-Dimethylethyl) | F.p. 70°C | |
| 1.010 | Methyl | H | 3-(1,1-Dimethylethyl) | $Kp_{18}$ 106°C | 1) |
| 1.011 | Methyl | H | 4-(1,1-Dimethylethyl) | F.p. 35°C | |
| 1.012 | Methyl | H | 4-(1,3,3-Trimethylbutyl) | $Kp_2$ 103°C | 2) |
| 1.013 | Methyl | H | 4-(1,1,3,3-Tetramethylbutyl) | Kp. 249°C | 1) |
| 1.014 | Methyl | H | 4-(2-Propenyl) | $Kp_{29}$ 120°C | 3) |
| 1.015 | Methyl | H | 4-(2-Methylpropenyl) | $Kp_2$ 75°C | 1) |
| 1.016 | Methyl | H | 4-(1-Methylethenyl) | $Kp_3$ 85°C | 2) |
| 1.017 | Methyl | H | 2-(2-Propinyl) | $Kp_3$ 86°C | 4) |

Tabelle (Fortsetzung)

| Bsp.-Nr. | $R^3$ | $R^4$ | $R^5$ | physik. Daten | Lit. |
|---|---|---|---|---|---|
| 1.018 | Methyl | H | 4-(2-Propinyl) | $Kp_{10}$ 102°C | 4) |
| 1.019 | Methyl | H | 4-(1-Propinyl) | F.p. 38°C | 5) |
| 1.020 | Methyl | H | 4-Cyclopropyl | Kp. 240°C | 6) |
| 1.021 | Methyl | H | 4-Cyclohexyl | $Kp_{9}$ 148°C | 8) |
| 1.022 | Methyl | Methyl | 5-Methyl | $Kp_{21}$ 98°C | |
| 1.023 | Methyl | Methyl | 6-Methyl | Kp. 217°C | 1) |
| 1.024 | Methyl | Methyl | 4-Methyl | $Kp_{7}$ 80°C | |
| 1.025 | Methyl | Methyl | 4-Ethyl | $Kp_{3}$ 71°C | 9) |
| 1.026 | Methyl | Methyl | 4-(1-Methylethyl) | Kp. 235°C | 1) |
| 1.027 | Methyl | Methyl | 5-(1,1-Dimethylethyl) | F.p. 30°C | |
| 1.028 | Methyl | Ethyl | 3-(1,1-Dimethylethyl) | $Kp_{20}$ 130°C | 1) |
| 1.029 | Methyl | 1-Methylethyl | 6-Methyl | Kp. 237°C | 1) |
| 1.030 | Methyl | Ethinyl | 5-(1,1-Dimethylethyl) | F.p. 87°C | 10) |
| 1.031 | Methyl | 1,1-Dimethylethyl | 5-(1,3,3-Trimethylbutyl) | $Kp_{1,5}$ 113°C | 2) |
| 1.032 | Methyl | 1,1-Dimethylethyl | 5-(1,1-Dimethylethyl) | F.p. 72°C | |
| 1.033 | Ethyl | H | 4-Ethyl | Kp. 229°C | 1) |
| 1.034 | Ethyl | H | 3-Methyl | Kp. 210°C | 1) |
| 1.035 | Ethyl | Methyl | 5-Methyl | Kp. 225°C | 1) |
| 1.036 | Ethyl | Methyl | 4-Methyl | $Kp_{35}$ 128°C | 7) |
| 1.037 | 2,2-Dimethylpropyl | Methyl | 4-Methyl | Kp. 267°C | 1) |

Literatur

1) Beilstein, 3. und 4. Ergänzungswerk, Bd. V
2) G. Fraenkel et al., J. Amer. Chem. Soc., 95, 3208 (1973)

3) Int. J. Chem. Kinetics 14, 351 (1982)
4) N.M. Libman et al., Zh. Org. Chim. 15, 125, 2375 (1979)
5) I.N. Demnin et al., ibid. 14, 2323 (1978)
6) In. S. Shabarow et al., ibid. 10, 1681 (1974)
7) In. V. Pozdnyakovica et al., ibid. 23, 154 (1987)
8) S.V. Zargorodnii et al., Uhr. Khim. Zhur., 35, 374 (1969)
9) M.S. Newman et al., J. Org. Chem., 37, 4469 (1972)
10) H. Tashiro et al., J. Chem. Soc. Perkin Trans. 1, 176 (1979)

Anwendungsbeispiele

Die nematodizide Wirkung der Alkylbenzole der allgemeinen Formel ließ sich durch folgende Versuche zeigen:

Die Wirkstoffe wurden hierfür

a) als 0,1 %ige Lösung in Aceton oder

b) als 10 %ige Emulsion in einem Gemisch aus 70 Gew.-% Cyclohexanol, 20 Gew.-% Nekanil® LN (Lutensol® AP6, Netzmittel mit Emulgier- und Dispergierwirkung auf Basis ethoxylierter Alkylphenole) und 10 Gew.-% Emulphor® EL (Emulan® EL, Emulgator auf Basis ethoxylierter Fettalkohole)

aufbereitet und entsprechend der gewünschten Konzentration mit Aceton im Falle a) bzw. mit Wasser im Falle von b) verdünnt.

Die im folgenden beschriebenen Versuche wurden jeweils zweimal durchgeführt.

Beispiel A

Aktivitätshemmung an Ditylenchus dipsaci (Stockälchen)

Man gab 1 ml Nematodensuspension in ein 10 ml Penicillinglas (ca. 100 Ditylenchus) und gab 1 ml der wäßrigen Wirkstoffaufbereitung zu. Nach 24 Stunden wurde unter dem Mikroskop die Aktivitätshemmung bestimmt.

Aktivitätshemmung bei 2 ppm der Verbindung Nr. 1.001 (80 %).

Beispiel B

10 ml Glasgefäße wurden mit 5 ml trockenem Quarzsand (Silbersand) gefüllt. Auf diesen pipettierte man 1 ml einer Suspension, die ca. 400 Nematoden enthält. Ein weiterer ml der Testaufbereitung des zu prüfenden Wirkstoffes wurde zugegeben. Durch diese Wassermenge soll der Sand gerade durchgefeuchtet sein. Nach 24 Stunden Incubationszeit bei Raumtemperatur setzte man einen 1 cm langen Sproßabschnitt der Dicken Bohne (Vicia faba) einige mm tief in den feuchten Sand.

Nach weiteren 24 Stunden waren die L 4-Larven von Ditylenchus dipsaci in das Pfanzengewebe eingedrungen und befanden sich in den untersten 10 mm des Bohnenstengels. Von diesem wurde nun der anhaftende Sand abgespült, die unteren 10 mm abgeschnitten und einmal längsgeteilt. Diese Stücke legte man für 24 Stunden in eine Schale mit 5 ml Wasser, um die eingedrungenen Nematoden zu extrahieren und anschließend zu zählen. Aus einem unbehandelten Stengelstück erhielt man nach dieser Prozedur ca. 100 Nematoden.

Mortalität: 80 %, 1 ppm der Verbindung Nr. 1.001.

Beispiel C

Tauchversuch an Meloidogyne incognita (Wurzelgallenneamtoden)

Tomatensetzlinge wurden für 3 Wochen in stark nematodeninfizierte Komposterde gepflanzt. Darauf entnimmt man die Pflanzen, spülte die Wurzeln und setzte sie für 60 Minuten in die wäßrige Wirkstoffaufbereitung. Nach dieser Zeit pflanzte man die Setzlinge einzeln in Plastiktöpfe (Ø 9 cm) mit sterilisierter Erde. Die Beurteilung von Wuchs und Befall der Wurzeln erfolgte nach 6-8 Wochen.

Kein Befall bis 40 ppm der Verbindung Nr. 1.001.

**Patentansprüche**

1. Verfahren zur Bekämpfung von Nematoden oder Verhütung eines Befalls von Kulturpflanzen durch Nematoden, dadurch gekennzeichnet, daß man eine wirksame Menge eines Alkylbenzols der allgemeinen Formel I,

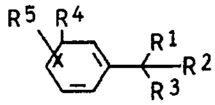

I

in der die Substituenten folgende Bedeutung haben:

$R^1$, $R^2$ $C_1$-$C_4$-Alkyl;

$R^3$ $C_1$-$C_6$-Alkyl, $C_3$-$C_6$-Cycloalkyl, $C_2$-$C_4$-Alkenyl oder $C_2$-$C_4$-Alkinyl;

$R^4$ Wasserstoff, $C_1$-$C_6$-Alkyl oder $C_2$-$C_4$-Alkenyl;

$R^5$ $C_1$-$C_6$-Alkyl, $C_3$-$C_6$-Cycloalkyl, $C_2$-$C_4$-Alkenyl oder $C_2$-$C_4$-Alkinyl,

auf die Schädlinge bzw. deren Lebensraum einwirken läßt.

2. Verfahren gemäß Anspruch 1, dadurch gekennzeichnet, daß man als Alkylbenzol 1-tert.-Butyl-3,5-dimethylbenzol verwendet.

3. Verwendung von Alkylbenzolen der Formel I gemäß Anspruch 1 zur Bekämpfung von Nematoden.

4. Verwendung von 1-tert.-Butyl-3,5-dimethylbenzol zur Bekämpfung von Nematoden.

Europäisches Patentamt

# EUROPÄISCHER RECHERCHENBERICHT

Nummer der Anmeldung

EP 91 10 8276

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D | US-A-2 769 745 (J.L. HARDY)<br>– – – – – | | A 01 N 27/00 |
| | | | **RECHERCHIERTE SACHGEBIETE (Int. Cl.5)** |
| | | | A 01 N |

Der vorliegende Recherchenbericht wurde für alle Patentansprüche erstellt

| Recherchenort | Abschlußdatum der Recherche | Prüfer |
|---|---|---|
| Den Haag | 09 September 91 | DONOVAN T.M. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument